# EUROPEAN PATENT APPLICATION

(11) **EP 1 148 316 A1**
(43) Date of publication of application: **24.10.2001**
(21) Application number: 99943272.7
(22) Date of filing: 10.09.1999
(51) Int. Cl.: G01B 11/02, G01B 11/26, G01B 11/00, G01B 21/00, G06T 7/00, B07C 5/10, B65G 47/48

(54) **INFORMATION READER**

(30) Priority: 03.12.1998 JP 34462998
(71) Applicant: Technowave, Ltd., Tokyo, 160-0003 (JP)
(72) Inventor: YOSHIDA, Takashi, Chiba 270-0033 (JP); KOMAZAWA, Yuuichi, Sapporo-shi,Hokkaido 007-0808 (JP)
(74) Representative: HOFFMANN - EITLE
(86) International application number: JP9904942
(87) International publication number: WO0033024

(57) **Abstract**

Information about the size and posture of an object of detection as well as about the distance between objects is instantly processed and supplied for external use without waiting for the objects having passed. An information reader comprises camera means (3) set up above a path (2) for take a crane shot of the path (2) within a predetermined range; a sensor (4) placed above a path (2) next to the camera means (3) for detecting the distance to the path (2); a processor (5) that receives the digital image data taken by the camera means (2) in response to detection of an object passing in the path (2) so as to recognize the profile of the object, calculates the height of the object based on the variation in value detected by the sensor, and performs corrective operations on the actual length and width of the object based on its apparent length and width corresponding to the pixel array of the profile data on the basis of corrective values the apparent image size corresponding to the camera distance; and output means (6) for producing the results of operation.

## Description

### FIELD OF INVENTION

The present invention relates to a physical distribution information reader used in a field that requires recognition of an article which moves on a path such as in the field of an automatic control of a physical distribution apparatus, which reader is suitable for reading the size (length, width, diameter, volume, and the like) of the detected article which moves on the path, the tilt angle of the detected article with respect to the direction of the path, the distance between the detected article and the leading or trailing article, and the like.

### BACKGROUND TECHNOLOGY

For controlling a physical distribution apparatus such as a belt conveyor, having information on the configuration, volume, orientation [attitude], and article-to-article spacing of a control target article makes it possible to substantially improve the physical distribution capability and cost.

In a conventional physical distribution apparatus, measurements have individually been made of a article configuration, volume, orientation, article-to-article distance, and the like, using separate detectors, as well as making a direct measurement of the actual article size or a calculation of the spacing distance or the article length from the passage speed and time.

For example, when a article moving on a conveyor is to be diverted [branched] by a diverting controller located downstream on the conveyor, it is necessary for the diverting controller to know ahead of time the spacing between the diverting article and the leading or trailing article and the diverting article length itself so as to prevent the diverting article from colliding with the leading or trailing article, thereby to efficiently divert the article.

If it was required to measure the article configuration, volume, orientation, and spacing in a conventional physical distribution apparatus, it has been necessary to separately install instruments at the objective locations, in addition requiring many large-scale sensors as well.

For example, if the article-to-article spacing is to be measured, photocell-based area sensors are often used in the form of two area sensors, mounted with a structure comprised of a large number of photocells aligned parallel to the path, in such a way to face each other. As an article enters the area sensor zone interrupting the light beams, the numbers of photocell ONs and OFFs are used to measure the spacing between the articles. For the measurement of an article length, a frequently used method calls for installing a laser scanner or the like separately from area sensors, thereby reading out the laser reflection. Thus, it has been necessary to install separate, moreover, a large number of sensors for measuring the article spacing or its length. Therefore, the results of measurements, such as I/O, serial communication, and parallel communication, often had to be transmitted to the diverting controller in separate sequences.

In order to accommodate such different means of measurement and transfer sequences, it has been necessary for the diverting controller which processes the measurement results to have hardware and software available corresponding to these individual sequences, resulting in different process times before the diverting controller can utilize the results.

Since the diverting controller is dictated to have its process time adapted to the slowest measurement target process time, making it too difficult to acquire data while allowing the conveyor line to travel at a sufficiently high speed. Therefore, it has usually been necessary to slow down or stop the conveyor line to compensate for the delay time needed for making measurements for the article.

Therefore, building an efficient apparatus which diverts many articles in a short time, for optimizing the location of instruments (sensors) and the conveyor speed, has required a sensitive and cumbersome adjustment of the entire physical distribution system.

Therefore, it has been desired to develop a device that can acquire in one shot and at high speed a plurality of pieces of information such as article configuration, volume, orientation, article-to-article spacing, and the like.

In regard to this question, a method has been conceived in which the article is measured from all directions and a computation processing of the result of measurement is executed after the article has passed the monitoring field of the measurement devices. For example, this is a method for measuring a hexagonal [6-sided] article for which ultrasonic wave or like sensors are installed in three directions, thereby measuring the conditions under which said sensors each switch: ON, OFF, and ON. However, this approach not only requires a process time equal to or greater than the time the article needs in passing the instruments, but it also suffers from the inability to measure along one direction, which interferes with the traveling direction, simultaneously with the other 2 directions; this requires installing a corner section perpendicular to the conveyor line for measuring along said direction and rotating the article 90° for completing the measurement. Therefore, it has been difficult to develop a high performance physical distribution system because of the need to expand the article-to-article spacing to accommodate the time equal to, or more for, the completion of all the foresaid processing steps.

### DISCLOSURE OF THE INVENTION

The present invention aimed at overcoming the above problems provides a physical distribution information reader that can acquire information on the detected article dimension, orientation, article-to-article distance by picking up an image of the detected article which passes in the path followed by processing the image.

The invention calls for using an image pickup means such as a CCD camera as a means for gathering information and a distance sensor based on an ultrasonic wave or the like and image processing the digital image acquired by the image pickup means using data from the distance sensor, whereby data necessary for a physical distribution control are collected and analyzed.

This construction simultaneously enables one to instantly acquire the detected article size or orientation, article-to-article distance information without waiting for the time in which the detected article passes through and to permit inputting the result exteriorly.

The physical distribution information reader of this invention comprises the following components:
(1) image pickup means located for looking down upon a path and picking up an image of a designated range of the path;
(2) a distance sensor which is located in the vicinity of said image pickup means and which detects the distance to the path or to the detected article on the path;
(3) configuration extraction means for extracting the configuration of the detected article from the digital image data of the detected article on the path picked up by said image pickup means;
(4) computation processing means for computing the height data of the detected article from a change in the detected values on said distance sensor and at the same time for correcting the apparent size in the configurational data extracted by said configuration extraction means using the correction value in accordance with the image pickup distance, thereby computing the actual size of the detected article; and
(5) outputting means for exteriorly outputting the computation results from the computation processing means.

Therefore, the invented device calls for image processing on receiving the detected signals of the detected article, thereby immediately providing dimensional information such as the detected article height, length, width, and diameter and exteriorly outputting said information along with identification data for said detected article, which may be effectively utilized as data for controlling or monitoring the downstream side of the path.

The computation processing means in this invention has functions to compute the article-to-article spacing for the detected article in the path from a change in the detected value of said distance sensor as the leading detected article and the trailing detected article pass and the digital image data picked up by said image pickup means, which permits exteriorly outputting, right after the instant detected article data, the distance to the next detected articles.

Furthermore, said computation processing means is provided with a function to compute the tilts of the pixel array in the above configuration data with respect to the longitudinal and transverse directions, thereby to output them as tilt angles of the detected article with respect to the path direction and at the same time to make a corrective computation of said length and width data by the correction values according to the tilt angles, so that the transport angle and orientation of the detected article with respect to the path can be provided as information to the outside, and in addition, any dimensional errors of the article traveling in a tilted condition can be prevented.

Said computation processing procedure is also provided with a function to make a correction for a parallax in the image by said image pickup means by recognizing the percent contraction in each axis measurement direction from the distortions in the longitudinal and transverse directions in said configurational data, thereby to make a corrective computation by the correction values according to respective percent contractions and thus to provide accurate data, even when a parallax is present in the image pickup means or when the image pickup means as installed is tilted.

For a case where the length of the detected article exceeds the imaging range of the image pickup means, the present invention is provided with means for assigning, to that length, a pre-selected maximum measured value, instead of calling it an error, thereby enabling the result to be outputted.

Monitors are connected to said image pickup means and computation processing means in this invention so as to display on the monitor screens the image data picked up by said image pickup means and the dimensional data of the detected article or the like, permitting a visual confirmation by an operator at the instrument location.

The present invention is applicable to a detector for a conveyor control system where the path is a conveyor and the detected article is a package traveling on the conveyor.

The present invention is also effective for recognizing or identifying traffic conditions where said path is a traffic route such as a road and railroad, and the detected article is a means of transportation such as automobiles and electrical trains. Thus, the path in this invention includes not only a case such as a belt conveyor where the path itself moves, but also one where the path is stationery, on which the articles travel by themselves.

Also in the present invention, the computation processing means is provided with a function to read symbols pasted or written on the detected article, which does away with the conventionally used image sensor type barcode or character readers and the like. The term symbol herein includes not only something like a barcode, but also numerals, letters, graphic patterns, and the like. That is, this invention is broadly applicable to any items recognizable by an image processing.

### THE BEST EMBODIMENT FOR CARRYING OUT THE INVENTION

Examples of the present invention are explained with reference to the attached drawings.

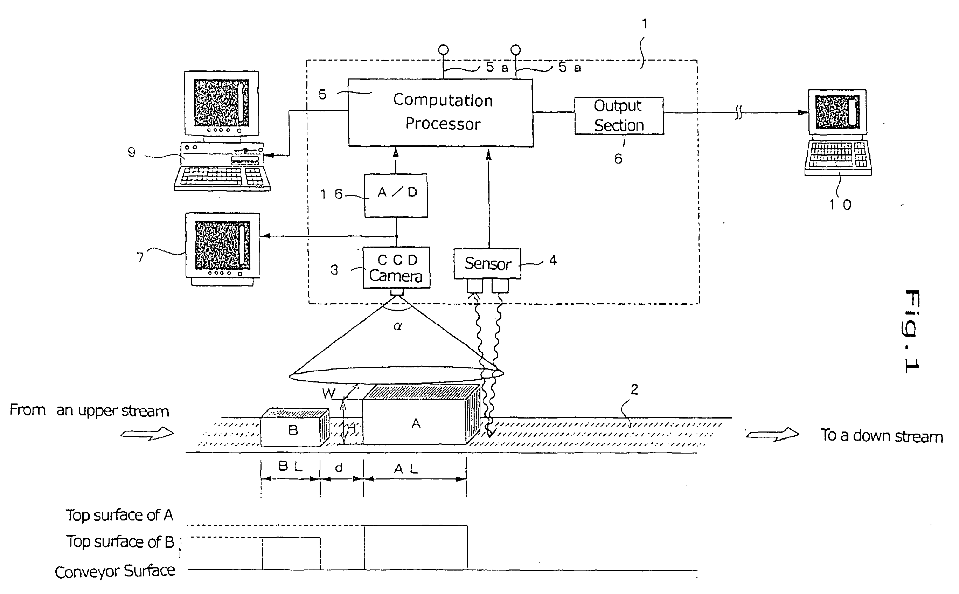

Figure 1 illustrates a hardware makeup for embodiment 1, where the physical distribution information reader of this invention is applied to detection of articles being transported on a conveyor.

A reader 1 is provided with a CCD camera 3 which is stationarily mounted above a belt conveyor 2 and which picks up an image looking down from above the belt conveyor 2; an ultrasonic wave distance sensor 4 which is stationarily mounted close to the CCD camera 3, likewise facing perpendicularly the belt conveyor 2; computation processor 5 as image recognition means and computation processing means, connected to the output terminals of the CCD camera 3 and distance sensor 4 ; and an output section 6 connected to the processor 5.

Belt conveyor 2 transports in the arrow direction multiple types of rectangular articles A, B... which each differ in height H, width W, and length L and which are packed in packing cardboard boxes spaced with a suitable distance d, wherein the spacing each between articles A, B, ..., their type, and transport orientation are arbitrary, depending on the way they were fed in the upstream side.

The CCD camera 3 has its field angle α fixed constant so as to pick up an image as a stationary type to cover a designated area of conveyor 2, where one can omit an auto-focus function or the like by having a fixed focus. The invention uses a system of processing the images picked up thereby processing the information on the article so that unlike the conventional type, information acquired without focusing alone can also be subjected to an image processing for using it as information adequate for a physical distribution control.

This example calls for using an NTSC type analog image picked up by the CCD camera 3, and the image is outputted as a real image on a television monitor 7 located in the vicinity of the reader device 1; and at the same time, the image is digitized via an A/D converter 8 and the digitized image data is outputted to the computation processor 5.

The ultrasonic wave distance sensor 4 constantly monitors the distance to the conveyor 2 and the actual change in the height of the articles being transported over conveyor 2, thereby constantly transmitting digital signals in accordance with number of count pulses to the computation processor 5, in addition; and in this embodiment, the change in the value detected as the article passes the initial and terminal edges is used as trigger signals for executing computation for an image processing.

Incidentally, for trigger signals, not only the change in the detected value on the distance sensor 4, one can also select an external input or those based on software incorporated in the computation processor 5.

For the distance sensor, an ultrasonic wave distance sensor 4 is used which provides a relatively broad detection range and which does not require a rigorous detection sensitivity in order to accommodate the range of images picked up by the CCD camera 3 and an error due to the shift motion of the conveyor 2, but one may also use, in addition to an ultrasonic wave based type, an infrared sensor, a laser distance sensor, and the like.

Computation processor 5 is a microcomputer made up of a CPU, ROM, RAM, and the like, wherein the CPU captures via the I/O port data from said distance sensor 4 and CCD camera 3 so as to compute, according to the program sequence stored in the ROM, the article height, longitudinal and transverse dimensions, and article-to-article distance as the article is transported on the conveyor 2, followed by outputting the result of computation to a monitoring personal computer 9, placed along with the television monitor 7 near where the reader device 1 is located, and at the same time transferring the result exteriorly via an output section 6.

The transferred data are captured by a personal computer 10, located in the downstream side of reader device 1, to be stored therein for use as a distribution data resource.

The data may be used by transferring it to a diverting controller or the like, located downstream of the conveyor 2, to be used as a sorting data for each of articles A and B when processed for diverting; and in addition, the data may be used as data resources for applications such as for cargo merging, diverting, picking, and inspecting.

The computation processor 5 is provided with connection outlet terminals 5a's for use in connecting a plurality of device 1s; connecting via the connection terminals 5a a plurality of devices 1 by a daisy chain or the like will permit an image reading processing of an even broader field, for which purpose a function is incorporated therein to control the priority sequence for each device 1.

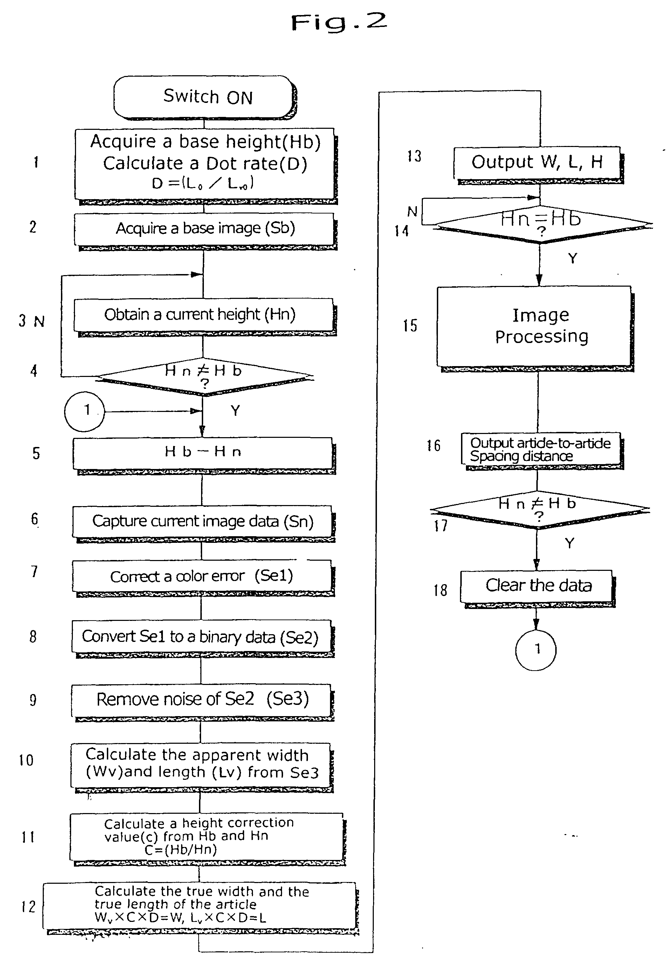

Figure 2 shows the sequence of processing for the above computation processor 5. When the electrical source for the conveyor 2 is switched on, the entire device 1 comes into operation; at the initial stage, the detection by the distance sensor 4 acquires a base height (Hb), that is, the distance to the conveyor surface when no article has yet reached from the upstream side. A dot rate D=(L₀/L_{VO}) is calculated for converting one dot on the screen at the base height to a real length. In this case, L₀ is a standard with a defined length; Lvo is the number of dots when said standard is displayed on the screen.

At the same time, a base image (Sb)is acquired by the CCD camera 3 (steps 1 and 2).

Then, the height (Hn) inputted by the constant [distance]sensor 4 is monitored to judge whether or not this value remains the same as the base height (Hb), (steps 3 and 4); when it is judged that there is no agreement, i.e., when it is judged that the article has passed this location, the difference between the current height (Hn) and base height (Hb) is obtained, which allows calculating the height of said article (step 5).

At the same time, with the change in said sensor 4 signals as trigger signals, count 1 is added as a data for the ID number and the like belonging to said article, and at the same time, the current image data (Sn) which is being picked up by CCD camera 3 is captured (step 6).

The image data contains the entire image of the article written in, along with the background color for the conveyor, so that the current image data (Sn) is subjected to a color-error correction (Se1) based on the base image data (Sb) (step 8).

The conveyor 2 has a background color, which is dark, so that when there is no article, only the background color is picked up; when there is a article, the article is in general khaki-colored due to a conventional cardboard, and the area other than that is a background color so that making a correction for the background color to the same tone will make the comparison clearer.

The outline of the article is then extracted from the data and converted to a binary data (Se2), followed by removing from the outline-extracted data, particles, i.e., pixels for several dots not in the outline, thereby producing a noise-deleted modified image (Se3) (Step 9).

Then, the apparent article width (Wᵥ) and length (Lᵥ) are calculated from the modified image (Se3) (step 10). These are calculated as numbers of dots for the width and the length of the outline of the modified image (Se3).

If the detected article is a rectangular article, portions amounting to several longitudinal and transverse dots are sampled and these are connected to provide lines whose cross points are used to compute the outline of the article, which can reduce the load on the processor 5, thereby shortening the processing time.

If there is an article too long to fit in the image screen of the CCD camera 3, the end edge of the outline will not be detected, for which there is a program set up so as to output it as a pre-selected maximum value. For example, it should be numerically set to correspond to the longest article among the articles being transported on a given conveyor line.

The article being transported on the conveyor 2 is not necessarily placed on the conveyor 2 parallel thereto, it may be in an oblique orientation. As a preparation for such a case, a coordinate conversion formula is incorporated in the program, which permits orthogonally converting the data using the formula for calculating the [real] width and length, which when outputted at the time of doing so as described later, along with the tilt angle with respect to the transport direction of the conveyor 2, may be used as a data resource for an orientation control and the like in the downstream side.

In order to make a correction for the parallax resulting from the angle of location [of means] for picking up an image, distortions in the longitudinal and transverse directions in the configuration data may be used to recognize percent contraction in each axis measurement direction and to make a correction with the correction data according to each percent contraction.

After this processing, the foresaid apparent width (Wᵥ) and length (Lᵥ) are multiplied by height correction (C) and dot rate (D). Height correction (C) is defined by C=(Hb/Hn); the dot rate as described above is given by D=(L_{O}/L_{VO}). That is, the true width is given by W=W_{V} × C × D and the true length by L=L_{V} × C×D (steps 11 and 12).

Then the width (W) and length (L) and height (H) of the passed article corresponding to the above computational results are transferred exteriorly (step 13). If there is a tilt angle, that tilt angle data along with the volume data etc may be outputted, also simultaneously with ID number data representing said article by a cumulative count, the current time data, and the like.

Separately, the base height (Hb) and (Hn) are continuously compared to each other by the sensor 4; and when the reading reverts to base height (Hb), i.e., when the article on which the image-processing has been completed moves out of the detection range, then the signal change which is received initiates monitoring the sp[acing to the next article, at the same time processing the image of the surface of the conveyor 2 (step 15).

Said image processing is executed under the same procedure as the foresaid steps 6-12, thereby to compute the spacing distance (d) to the next article, which is outputted simultaneously with the above data (step 16). Incidentally, if the article-to-article distance in this case is too long to be accessible within the image pickup range, this will be outputted as a pre-selected spacing distance.

The above steps 5,6 are processed at a very high speed, depending upon the clock frequency of the CPU in the computation processor 5; the output data during the processing are displayed through a suitable GUI on each of the personal computer monitors 9 and 10.

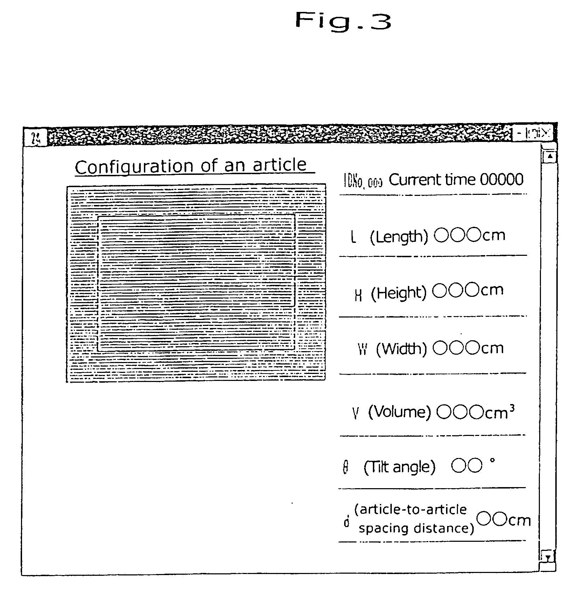

Figure 3 shows an example of the display content, where the window image on the monitor has a graphic display area and a numerical display area; the graphic display area shows the longitudinal and transverse lengths of the article by a graphic such as in a broken line; the numerical display area numerically displays ID number, the current time, length, height, width, volume, the tilt angle with respect to the conveyor transport direction, the spacing distance to the next article, and the like.

When the next article is detected on the distance sensor 4, the current data are cleared (set 16,17), and the processing starting from step 5 for the next article is repeated.

In the above embodiment, CCD camera 3 was stationarily mounted immediately above the belt conveyor 2 to pickup an image of the article as a planar image, but it is also possible to obtain a 3-dimensional image by fixing [the camera] at a designated tilt angle, where the percent contraction in each axis measurement direction can also be captured for a similar correction.

The invented device permits detecting not only a rectangular article in a packed container, but also articles transported in [other]configurations, such as polygonal, cylindrical, and the like, including a carton with the top open as long as its outline can be extracted for reading out its 3-dimensional configuration.

If the top surface of the article is pasted with a label printed with symbols such as a barcode label or the like, such symbol data may also be extracted at the stage of image processing to be read. This can be achieved by incorporating a barcode reader program or the like in the computation processor 5, which eliminates a need for a dedicated barcode reader such as a laser scanner. These read out symbols including not only barcodes, but also numerals and letters can also be recognized.

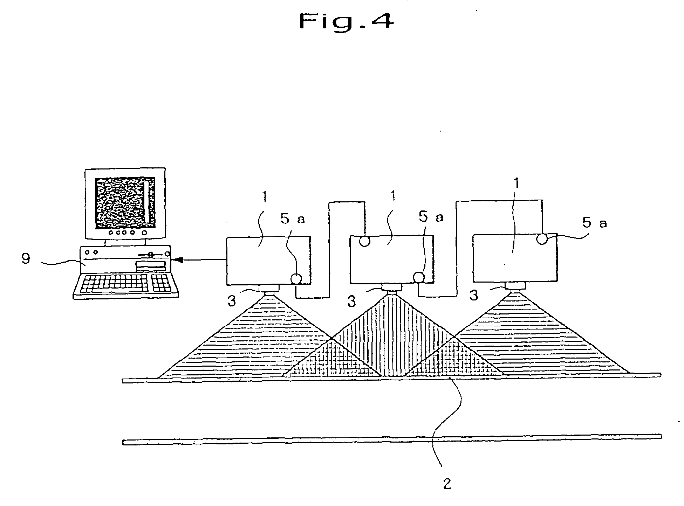

Figure 4 shows embodiment 2, in which a plurality of readers 1 are connected to be applicable for reading out articles. The makeup of device 1 is the same as with embodiment 1; like symbols are used for the explanation.

In this embodiment, the computation processors 5 in the devices 1 are each connected via connection terminals 5a by a daisy chain with individual CCD cameras 3 located above the belt conveyor 2 in such a way that the image pickup ranges will mutually overlap.

When a plurality of devices 1 are connected as in this case, a broad range of image processing is shared by respective devices when the article is too long or too wide to be picked up by a single CCD camera 3, thereby reducing the load per device, in turn, enabling the processing at a higher speed.

In the above embodiments, a single or a plurality of the invented devices were applied for reading articles being transported on a conveyor, but they may also be used for measuring dimensions such as longitudinal, transverse, and height sizes and article-to-article distance for detected articles in other physical distribution mechanisms or in a traffic system. For example, the present invention is applicable to a variety of fields, such as for the detection of the type of vehicles traveling on a road and measurement of a vehicular distance between vehicles and the like.

### Potential Industrial Utility

As the foregoing explanation clearly set forth, the present invention calls for picking up an image of a detected article passing along the path, processing the image to permit instantly acquiring the detected article dimension, orientation, and detected article-to-article distance information by image processing without waiting for the time the detected article to pass, so that the data process time is reduced compared to the conventional practice of measuring the detected article using a variety of measurement devices, whereby the result of measurement can be exteriorly transferred without interfering with the stream over the entire path. The information which can be acquired as a digital data herein permits a liberal computer processing or application. Since the process needs a minimum number of required instruments such as sensors, this makes the present process excellent in terms of durability and maintenance capabilities, and potentially less costly.

### BRIEF DESCRIPTION OF THE DRAWINGS

Figure 1 illustrates the hardware makeup of the physical distribution information reader of embodiment 1 of this invention.
Figure 2 is a flowchart showing the processing sequence for the reader device.
Figure 3 illustrates an example of a monitor output screen during the course of processing.
Figure 4 illustrates a case where a plurality of readers of this invention are connected.

## Claims

1. A physical distribution information reader comprising:
(1) image pickup means located for looking down upon a path and picking up an image of a designated range of the path;
(2) a distance sensor which is located in the vicinity of said image pickup means and which detects the distance to the path or to the detected article on the path;
(3) configuration extraction means for extracting the configuration of the detected article from the digital image data of the detected article on the path picked up by said image pickup means;
(4) computation processing means for computing the height data of the detected article from a change in the detected values on said distance sensor and at the same time for correcting the apparent size in the configuration data extracted by said configuration extraction means using the correction value in accordance with the image pickup distance, thereby computing the actual size of the detected article; and
(5) outputting means for exteriorly outputting the computation results from the computation processing means.

2. A physical distribution information reader as set forth in Claim 1 wherein said computation processing means has functions to compute the article-to-article spacing for the detected article in the path from a change in the detected value of said distance sensor as the leading detected article and the trailing detected article pass and the digital image data picked up by said image pickup means.

3. A physical distribution information reader as set forth in Claim 1 wherein said computation processing means has a function to compute the extent at which the pixel array tilts with respect to the longitudinal and transverse directions in said configuration data, thereby to output it as the tilt angle for detected article with respect to the path direction, and at the same time, to make a corrective computation for said length and width using the correction values in accordance with the said tilt angle.

4. A physical distribution information reader as set forth in any one of Claims 1 to 3 wherein said computation processing sequence is provided with a function to make a correction for a parallax in the image by said image pickup means by recognizing the percent contraction in each axis measurement direction from the distortions in the longitudinal and transverse directions in said configuration data, thereby making a corrective computation by the correction values according to respective percent contractions.

5. A physical distribution information reader as set forth in any one of Claims 1 to 4, further comprising means, when the length of the detected article exceeds the imaging range of the image pickup means, for assigning a pre-selected maximum measured value to that length.

6. A physical distribution information reader as set forth in any one of Claims 1 to 5 wherein the image data picked up by said image pickup means and the dimensional data of the detected article are displayed on monitor screens.

7. A physical distribution information reader as set forth in any one of Claims 1 to 6 wherein said path is a conveyor and the detected article is a package transported on the conveyor.

8. A physical distribution information reader as set forth in any one of Claims 1 to 6 wherein said path is a traffic route and the detected article is a means of transportation.

9. A physical distribution information reader as set forth in any one of Claims 1 to 8, wherein the computation processing means is provided with a function to read symbols pasted or written on the detected article.
